# FASCICULE DE BREVET EUROPEEN

(11) **EP 2 423 631 B1**
(45) Date de publication et mention de la délivrance du brevet: **03.07.2013**
(21) Numéro de dépôt: 11178235.5
(22) Date de dépôt: 22.08.2011
(51) Int. Cl.: F28D 20/00, B01D 53/26, F24F 3/14

(54) **Réacteur thermochimique amélioré**
Verbesserter thermochemischer Reaktor
Improved thermochemical reactor

(30) Priorité: 24.08.2010 FR 1056727
(43) Date de publication de la demande: 29.02.2012
(73) Titulaire: Electricité de France, 75008 Paris (FR)
(72) Inventeur: Hongois, Stéphanie, 94300 Vincennes (FR); Radulescu, Mihaï, 77250 Moret-sur-Loing (FR); Stevens, Philippe, 77940 Noisy Rudignon (FR)
(74) Mandataire: Regimbeau

(56) Documents cités:
- EP-A1- 1 288 583
- DE-A1- 3 511 725
- DE-A1- 19 539 292
- DE-C1- 19 512 852

## Description

La présente invention concerne les dispositifs de chauffage d'un fluide, notamment pour le chauffage de l'air pour les bâtiments dans un système ouvert.

Plus particulièrement, l'invention concerne les réacteurs thermochimiques utilisés pour le chauffage d'un bâtiment dans un système ouvert selon le préambule de la revendication 1. Un tel réacteur est connu du document DE 3 511 725 A1.

Dans ce domaine, on utilise généralement l'humidité de l'air extrait d'un bâtiment pour décharger sous forme thermique l'énergie chimique du réacteur. On rappelle qu'un réacteur thermochimique comprend généralement un réservoir comprenant un matériau thermochimique composite généralement à base de matériau de sorption, le réservoir comprenant une entrée d'air pour alimenter le matériau thermochimique en air humide pour activer la réaction thermochimique. En effet, l'interaction entre l'humidité de l'air et le matériau thermochimique provoque une réaction chimique exothermique permettant de chauffer l'air qui est alors extrait du réservoir pour être utilisé dans un bâtiment en vu de son chauffage.

Ce type de stockage de chaleur par procédé chimique est le plus adapté aux longues durées. Il a les avantages d'avoir des capacités volumiques beaucoup plus importantes et des durées de stockage sans limite car l'énergie stockée n'est ni consommée, ni dissipée par des pertes tant que les deux composants chimiques ne sont pas réunis. L'application la plus intéressante des réacteurs thermochimiques est le stockage de chaleur inter-saisonnier pour les bâtiments. On peut stocker une quantité importante de chaleur en été et l'utiliser ensuite, avec peu de pertes, en hiver.

Dans ce domaine, on connaît notamment les documents WO 2004/039488, WO 2008/099262, EP 0 258 979, EP 1 610 084, EP 1 651 817, DE 3511725, DE 19512852, EP 1288583 et DE 19539292. Toutefois, des critiques ont été émises quant à l'utilisation de réacteurs thermochimiques selon l'état de la technique. En effet, un défaut d'humidité peut apparaître, car l'air extrait du bâtiment n'est pas toujours assez humide pour alimenter la réaction avec le matériau thermochimique contenu dans le réservoir du réacteur. La quantité d'énergie récupérée par réaction chimique dépend en premier lieu de l'humidité absolue de l'air, ainsi que, en second lieu, de la température du matériau thermochimique. En effet, la quantité d'énergie récupérée est d'autant plus faible que l'humidité absolue de l'air injectée est faible et/ou que la température du matériau thermochimique est élevée.

En conséquence, un but de la présente invention est de fournir un réacteur thermochimique amélioré par rapport à l'état de la technique.

Plus particulièrement, un but de la présente invention est de fournir un réacteur thermochimique permettant d'augmenter le rendement de la réaction thermochimique à partir de l'air extrait du bâtiment, même si l'humidité de celui-ci n'est pas suffisante.

A cet effet, l'invention concerne un réacteur thermochimique tel que défini en revendication 1 annexée.

Avantageusement mais facultativement, l'invention comprend au moins l'une des caractéristiques suivantes :
- le matériau thermochimique contenu dans le réservoir comprend une Zéolite et/ou du MgSO₄,
- le matériau thermochimique se présente sous la forme de billes de diamètre entre 1 et 10 mm, mais de préférence de l'ordre de 2mm.

L'invention concerne également un bâtiment caractérisé en qu'il comprend un réacteur thermochimique selon l'invention, le bâtiment comprenant des moyens d'extraction d'air permettant d'alimenter l'humidificateur en entrée du réservoir du réacteur thermochimique en air pour l'alimentation de la réaction chimique et un moyen de circulation destiné à la circulation du fluide en sortie de l'échangeur agencé au sein du sein du réservoir.

L'invention concerne également un procédé d'utilisation d'un réacteur thermochimique, tel que défini en revendication indépendante annexée.

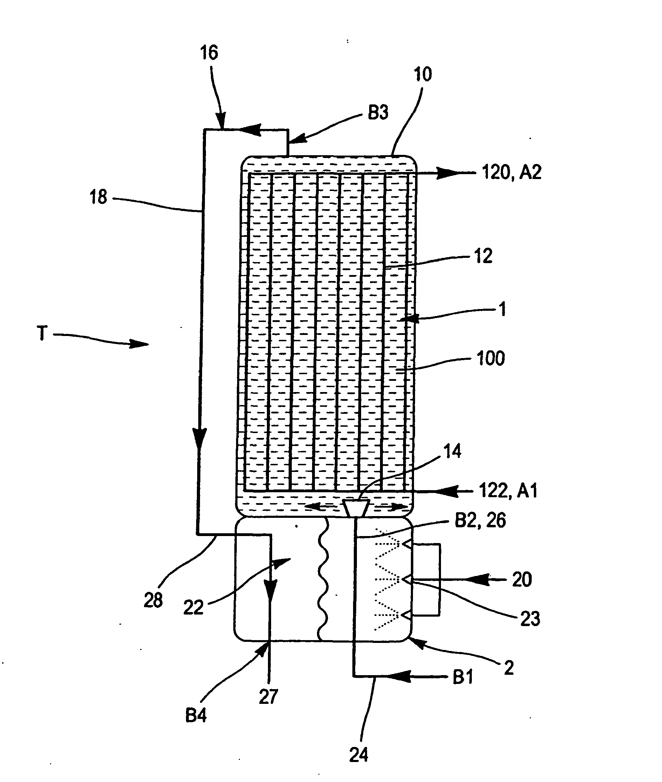

D'autres buts, avantages et caractéristiques de la présente invention apparaîtront à la lecture de la description qui va suivre au regard de la figure 1 (figure unique) annexée donnée à titre illustratif et qui représente un réacteur thermochimique selon une réalisation particulière de la présente invention.

Ainsi, l'invention est basée essentiellement sur le fait d'associer en combinaison un réacteur thermochimique avec un échangeur de chaleur permettant d'augmenter sensiblement le rendement d'un réacteur thermochimique comme expliqué par la suite.

Une réalisation préférentielle de la présente invention concerne une combinaison entre un réacteur thermochimique, un échangeur de chaleur et un humidificateur, ce qui permet d'obtenir un rendement encore meilleur du réacteur thermochimique même si l'humidité absolue de l'air utilisée pour la réaction thermochimique (par exemple extraite d'un bâtiment) est faible. Dans la suite de la description, les références alphanumériques commençant par la lettre « A » sont liées au fluide à chauffer et les références alphanumériques commençant par la lettre « B » sont liées à l'air humide pour l'alimentation du réacteur thermochimique proprement dite.

En référence à la figure 1 annexée, un réacteur thermochimique T selon une réalisation particulière de la présente invention comprend un réacteur 1 proprement dit incluant un réservoir 10 qui contient un matériau thermochimique 100 qui réagit de manière exothermique avec l'eau, par exemple un matériau composite à base de matériau de sorption. Le matériau 100 comprend préférentiellement un composite à base de Zéolite et MgSO₄ (voir notamment le document FR 08 56 068), ou d'un seul des deux ou de tout autre élément connu de l'état de la technique qui réagit de manière exothermique avec l'eau. Avantageusement, ce matériau thermochimique 100 se présente sous la forme de petites billes d'environ 2 mm de diamètre.

Le réservoir de stockage 10 du matériau 100 comprend une entrée 14 d'air B pour alimenter le matériau thermochimique 100 en air humide (et engendrer ainsi la réaction thermochimique) et une sortie 16 pour la sortie de l'air chauffé et séché lors d'une réaction thermochimique avec le matériau 100 au sein du réservoir 10.

Plus précisément, l'air B pour l'alimentation du réservoir, une fois rentré dans le réservoir 10 par l'entrée 14, engendre par son humidité une réaction chimique avec le matériau thermochimique. Une production de chaleur a alors lieu lors de la réaction chimique exothermique entre l'eau (préférentiellement sous forme de vapeur provenant de l'humidité de l'air B) et le matériau thermochimique 100.

Ainsi, l'air B traversant le réservoir 10 s'assèche rapidement, et il récupère également de la chaleur libérée par la réaction thermochimique.

A la sortie 16 du réacteur, l'air B se retrouve avec une humidité absolue plus faible et une température plus élevée qu'à l'entrée 14 du réservoir 10.

Toutefois, la quantité de chaleur produite par la réaction entre le matériau thermochimique 100 et l'eau de l'air humide est d'autant plus élevée que la température du réservoir 10 est basse. Il est donc intéressant de limiter la hausse de température du réservoir 10. Afin de limiter cette hausse de température, il est prévu de doter le réservoir 10 d'un échangeur thermique 12.

Préférentiellement, un but de la présente combinaison est de limiter la température du matériau thermochimique à 40°C au sein du réservoir 10 et de récupérer une partie de la chaleur produite à l'aide d'un fluide à chauffer A circulant au sein de l'échangeur thermique intégré 12. Ce fluide A est par exemple un liquide ou un gaz (comme l'air).

Par ailleurs, un défaut d'humidité peut paraître, car l'air B, par exemple extrait d'un bâtiment et injecté dans l'entrée 14, n'est pas toujours assez humide pour alimenter la réaction avec le matériau thermochimique contenu dans le réservoir 10.

Or, l'humidité absolue de l'air B pour l'alimentation du réacteur T est le paramètre limitant de la réaction thermochimique avec le matériau 100.

Ainsi, il est également prévu de doter le réacteur d'un humidificateur comme décrit ci-après afin d'augmenter l'humidité absolue de l'air B1.

En conséquence, la combinaison d'un réacteur thermochimique, d'un échangeur de chaleur et d'un humidificateur permet d'augmenter sensiblement le rendement et permet d'utiliser de manière optimale l'air injecté pour la réaction thermochimique.

Plus précisément, le réacteur thermochimique comprend un échangeur thermique 12 agencé au sein du réservoir 10. Cet échangeur thermique est destiné à chauffer un fluide A (fluide destiné à être chauffé), distinct de l'air B destiné à être injecté pour l'alimentation du réacteur thermochimique. Le chauffage du fluide A est effectué à partir d'au moins une partie de l'énergie thermique provenant de la réaction thermochimique exothermique au sein du réservoir 10. Ainsi, pour limiter une éventuelle carence d'humidité dans le réservoir 10 et pour récupérer un maximum d'énergie stockée, une solution consiste à intégrer un échangeur thermique 12 à l'intérieur du réacteur 1 pour récupérer une partie de la chaleur produite directement dans le réservoir 10. En conséquence, l'élévation de la température du réservoir, due à la réaction thermochimique exothermique, est limitée et la quantité de chaleur extraite du matériau 100 est plus grande par rapport à l'état de la technique.

Ainsi, la réaction thermochimique au sein du réservoir 10 chauffe via l'échangeur intégré 12 le fluide A provenant de l'extérieur qui sera utilisé ensuite pour chauffer de préférence un bâtiment.

En conséquence, l'échangeur thermique 12 permet un échange de chaleur avec le fluide A, sans que ce dernier soit en contact ni avec le matériau thermochimique 100, ni avec l'air B pour l'alimentation du réacteur thermochimique 1.

Avantageusement, le réacteur thermochimique T est caractérisé en ce qu'il comprend en outre un humidificateur 2 destiné à augmenter le taux d'humidité de l'air B entrant au sein du réservoir 10. Un tel humidificateur permet en effet d'augmenter l'humidité de l'air B pour l'alimentation du réservoir 10 afin d'optimiser le rendement de la réaction thermochimique exothermique au sein du réservoir.

Un tel humidificateur 2 comprend préférentiellement des buses 23 de pulvérisation de gouttelettes d'eau connectées à une arrivée d'eau 20 et agencées le long du passage de l'air B pour l'alimentation du réacteur mais peut être de toute autre forme et structure connue de l'état de la technique.

Selon la présente invention l'humidificateur 2 comprend en outre un moyen de chauffage 22 de l'air B₁ au sein de l'humidificateur. Un tel moyen de chauffage 22 permet d'augmenter sensiblement la quantité d'humidité absorbée par l'air B pour l'alimentation du réservoir 10. En effet, lors du passage dans l'humidificateur 2, l'air B₁ extrait du bâtiment et injecté dans l'humidificateur 2, est refroidi par la vaporisation des gouttelettes d'eau avec lesquelles il est en contact, ce qui provoque une chute de la température de l'air. Or, la chute de la température diminue d'autant la quantité d'eau que l'air peut absorber ; autrement dit, plus l'air est chaud, plus il peut absorber d'eau (et donc plus son humidité absolue est grande). Aussi, afin de contrebalancer ces effets en retour, il est prévu l'agencement d'un échangeur thermique 22 permettant de prévenir toute chute de la température de l'air B2 due au contact avec les gouttelettes et éventuellement d'augmenter la température de l'air B₁ extrait.

Ainsi, la combinaison d'un réacteur, d'un échangeur intégré et d'un humidificateur muni d'un échangeur thermique cherche paradoxalement à réduire la température du matériau thermochimique 100 au sein du tout en transférant de la chaleur à l'air B en entrée du réservoir 10.

Le moyen de chauffage 22 de l'air au sein de l'humidificateur 2 est un échangeur d'énergie thermique secondaire 22 entre l'air B₁ extrait du bâtiment et injecté au sein de l'humidificateur 2 à l'entrée 24 et l'air B₃ sortant du réservoir 10 et circulant par la canalisation 18 jusqu'à l'échangeur 22 et introduit par l'entrée 28. Ainsi, un tel échange thermique entre l'air sortant B₃ du réservoir 10 et l'air B₁ au sein de l'humidificateur 2 évite de recourir à une source d'énergie externe pour le chauffage de l'air B₁. On optimise ainsi le rendement du réacteur en réutilisant l'énergie thermique résiduelle de l'air B₃ en sortie du réacteur 1. En effet, malgré l'échangeur intégré 12 qui récupère une bonne partie de la chaleur produite dans le réservoir 10, on observe que l'air B₃ en sortie du réservoir contient de l'énergie thermique résiduelle.

On peut utiliser cette énergie pour améliorer l'humidité de l'air extrait du bâtiment B₁ dans un échangeur humidificateur 2 placé en amont du réservoir 10. Dans cet échangeur, une injection d'eau est effectuée dans l'air B₁ pour augmenter son humidité et, dans le même temps, un transfert de chaleur se fait de l'air B₃ à la sortie 16 du réservoir 10 vers l'air B₁ à l'entrée 24 de l'humidificateur 2. Ainsi, au moins une partie de l'énergie thermique de l'air chaud et sec en sortie du réservoir 10 est transférée à l'air B₁ dans l'humidificateur, pour contrebalancer la perte de chaleur provoquée par la vaporisation de l'eau pulvérisée par les buses 23.

Ainsi, la combinaison entre :
- d'une part un humidificateur 2 comprenant un échangeur de chaleur 22 relié à la sortie du réservoir 10,
- et d'autre part un échangeur thermique 12 agencé au sein dudit réservoir 10
permet d'augmenter sensiblement le rendement du réacteur thermochimique T selon l'invention.

L'invention concerne également un procédé d'utilisation d'un réacteur thermochimique selon l'invention comprenant les étapes suivantes :
- extraction d'air B₁ par exemple d'un bâtiment pour l'alimentation de la réaction thermochimique avec le matériau contenu dans le réacteur thermochimique T. A titre illustratif, les caractéristiques de cet air B₁ (par exemple extrait du bâtiment) à l'entrée 24 de l'humidificateur 2 sont les suivants : température 20°C, humidité relative 50%.
- humidification de l'air B₁ préalablement à son introduction au sein du réservoir 10 du réacteur thermochimique T,
- dans le même temps, une étape de chauffage de l'air B₁ pour compenser la chaleur perdue lors de la vaporisation d'eau pulvérisée est effectuée durant l'étape d'humidification. A titre illustratif, l'air B₂ en sortie 26 de l'humidificateur 2 connectée à l'entrée 14 dans le réservoir 10 a les caractéristiques suivantes : température 20°C, humidité relative 100%. Préférentiellement cette étape de chauffage est effectuée au moins partiellement par l'échange thermique avec l'air B₃ en sortie 16 du réservoir 10 du réacteur thermochimique T (récupération de l'énergie thermique résiduelle). Bien évidemment, dans certains cas, l'air B₂ en sortie 14 d'humidificateur 2 peut être à une température supérieure à la température d'entrée de l'air B₁ dans l'humidificateur 2,
- introduction de l'air B₂ au sein du réservoir 10 du réacteur thermochimique T,
- réaction chimique entre la vapeur d'eau contenue dans l'air B₂ introduit au sein du réservoir 10 et le matériau thermochimique 100,
- dans le même temps, introduction du fluide A₁ à chauffer, distinct de l'air B, dans l'entrée 122 de l'échangeur thermique 12 au sein du réservoir 10,
- chauffage du fluide A₁ par l'échangeur thermique 12 situé au sein du réservoir 10,
- extraction du fluide A₂ en sortie 120 de l'échangeur thermique 12,
- extraction de l'air B₃ en sortie 16 du réservoir 10 du réacteur thermochimique T. A titre illustratif, l'air B₃ a les caractéristiques suivantes : température 40°C, humidité relative 5%,
- injection de l'air B₃ en sortie 16 du réservoir 10 du réacteur thermochimique T via la canalisation 18 dans l'entrée 28 de l'échangeur 22 de l'humidificateur 2 permettant le transfert de chaleur vers l'air B₁ entrant dans l'humidificateur 2 comme expliqué précédemment,
- extraction de l'air B₄ en sortie 27 de l'échangeur 22 de l'humidificateur 2. A titre illustratif, l'air B₄ en sortie 27 de l'échangeur 22 a les caractéristiques suivantes : température 20°C,
- à titre illustratif, le fluide A₁ en entrée 122 de l'échangeur thermique 12 au sein du réservoir 10 a une température de 0°C et le fluide A₂ en sortie 120 de l'échangeur 12 a une température de 40°C.

Il est à noter qu'il n'y a aucun transfert de matière entre le matériau thermochimique 100 (ou l'air B) et le fluide A grâce à l'échangeur thermique primaire 12 au sein du réservoir 10.

L'homme du métier comprendra que le fluide A à chauffer entre dans l'échangeur 12 par l'entrée 122 pour y être chauffé et ressort par la sortie 120, sans pour autant être en contact avec le matériau thermochimique 100 ou l'air B.

L'air humide B destiné à la réaction chimique proprement dite, quant à lui entre dans l'humidificateur 2 par l'entrée 24 pour augmenter son taux d'humidité (le transfert de chaleur au travers de l'échangeur 22 contrebalançant la perte de chaleur provoquée par la vaporisation de l'eau pulvérisée) ressort de l'humidificateur 2 par la sortie 26, rentre dans le réservoir 10 par l'entrée 14 pour participer à la réaction chimique, puis ressort du réservoir 10 par la sortie 16 pour circuler dans la canalisation 18 et être injecté dans l'échangeur 22 par l'entrée 28 et ressort de l'échangeur 22 par la sortie 27.

## Revendications

1. Réacteur thermochimique (T) comprenant :
- un réservoir (10) comprenant un matériau (100) qui réagit de manière exothermique avec de l'eau, le réservoir comprenant une entrée (14) pour alimenter le matériau (100) en air (B), humide, afin d'alimenter une réaction chimique entre l'eau contenue dans l'air (B) et le matériau (100) et une sortie (16) pour évacuer l'air (B) une fois chauffé et séché par la réaction chimique au sein dudit réservoir (10),
le réacteur thermochimique (T) comprenant en outre un échangeur thermique (12) agencé au sein du réservoir (10) et étant destiné à chauffer un second fluide (A) distinct de l'air (B) intervenant dans la réaction chimique, avec au moins une partie de l'énergie thermique provenant de la réaction chimique afin d'extraire du réservoir (10) au moins une partie de l'énergie thermique provenant de la réaction chimique, et un humidificateur (2) destiné à augmenter le taux d'humidité de l'air (B₂) entrant au sein du réservoir (10) pour l'alimentation de la réaction chimique,
**caractérisé en ce qu'**il comprend en outre un moyen de chauffage (22) de l'air (B₁) entrant au sein de l'humidificateur (2), le moyen de chauffage comprenant un échangeur d'énergie thermique (22) entre l'air (B₁) entrant au sein de l'humidificateur (2) et l'air (B₃) sortant du réservoir (10).

2. Réacteur thermochimique (T) selon la revendication 1, **caractérisé en ce que** le matériau thermochimique (100) contenu dans le réservoir (10) comprend une Zéolite et/ou du MgSO₄.

3. Réacteur thermochimique (T) selon la revendication 1 ou 2, **caractérisé en ce que** le matériau thermochimique (100) se présente sous la forme de billes de diamètre entre 1 et 10 mm, mais de préférence de l'ordre de 2mm.

4. Bâtiment (M) caractérisé en qu'il comprend un réacteur thermochimique (T) selon l'une des revendications 1 à 3, le bâtiment (M) comprenant des moyens d'extraction d'air permettant d'alimenter l'humidificateur (2) en entrée du réservoir (10) du réacteur thermochimique (1) en air (B) pour l'alimentation de la réaction chimique et un moyen de circulation destiné à la circulation du fluide (A₂) en sortie de l'échangeur (12) agencé au sein du sein du réservoir (10).

5. Procédé d'utilisation d'un réacteur thermochimique, le réacteur thermochimique selon l'une des revendications 1 à 3, comprenant un réservoir (10) au sein duquel une réaction thermochimique a lieu, comprenant les étapes suivantes :
a) introduction d'air (B₂) pour l'alimentation de la réaction avec le matériau thermochimique contenu dans le réservoir (10) du réacteur thermochimique (T),
b) introduction d'un fluide (A₁) à chauffer distinct de l'air (B) pour l'alimentation du réacteur thermochimique (1) dans un échangeur (12) agencé au sein du réservoir (10),
c) chauffage du fluide (A₁) à chauffer par l'échangeur thermique (12) agencé au sein du réservoir (10),
d) extraction du fluide (A₂) en sortie de l'échangeur thermique (12),
e) extraction de l'air (B₃) en sortie du réservoir (10),
f) humidification de l'air (B₁) pour l'alimentation de la réaction chimique préalablement à son introduction au sein du réservoir (10) du réacteur thermochimique (T),
**caractérisé en ce qu'**une étape de chauffage de l'air (B₁) pour l'alimentation de la réaction chimique (1) est effectuée durant l'étape d'humidification, cette étape de chauffage de l'air (B₁) pour l'alimentation de la réaction chimique durant l'étape d'humidification étant effectuée au moins partiellement par échange thermique avec l'air (B₃) ayant alimenté la réaction chimique (16) repris en sortie du réservoir (10).

## Patentansprüche

1. Thermochemischer Reaktor (T), umfassend:
- einen Behälter (10), der ein Material (100) enthält, das auf exotherme Weise mit Wasser reagiert, wobei der Behälter einen Einlass (14) für die Versorgung des Materials (100) mit feuchter Luft (B) umfasst, um eine chemische Reaktion zwischen dem in der Luft (B) enthaltenen Wasser und dem Material (100) zu speisen, und einen Auslass, um die Luft (B) abzulassen, nachdem sie durch die chemische Reaktion im Innern des Behälters (10) erwärmt und getrocknet wurde,
wobei der thermochemische Reaktor (T) ferner einen Wärmetauscher (12) umfasst, der im Innern des Behälters (10) angeordnet ist und dafür bestimmt ist, ein zweites anderes Fluid (A) als die Luft (B), die an der chemischen Reaktion beteiligt ist, mit mindestens einem Teil der Wärmeenergie, die aus der chemischen Reaktion stammt, zu erwärmen, um aus dem Behälter (10) mindestens einen Teil der Wärmeenergie, die aus der chemischen Reaktion stammt, abzuziehen,
- und einen Befeuchter (2), der dafür bestimmt ist, den Feuchtigkeitsgehalt der Luft (B₂), die zur Speisung der chemischen Reaktion in das Innere des Behälters (10) eintritt, zu erhöhen,
**dadurch gekennzeichnet, dass** er ferner ein Mittel zum Erwärmen (22) der Luft (B₁), die in das Innere des Befeuchters (2) eintritt, umfasst, wobei das Mittel zum Erwärmen einen Wärmeenergietauscher (22) zwischen der Luft (B₁), die in das Innere des Befeuchters (2) eintritt, und der Luft (B₃), die aus dem Behälter (10) austritt, umfasst.

2. Thermochemischer Reaktor (T) nach Anspruch 1, **dadurch gekennzeichnet, dass** das thermochemische Material (100), das in dem Behälter (10) enthalten ist, einen Zeolith und/oder MgSO₄ umfasst.

3. Thermochemischer Reaktor (T) nach Anspruch 1 oder 2, **dadurch gekennzeichnet, dass** das thermochemische Material (100) in Form von Kugeln mit einem Durchmesser zwischen 1 und 10 mm, jedoch vorzugsweise in der Größenordnung von 2 mm, vorliegt.

4. Gebäude (M), **dadurch gekennzeichnet, dass** es einen thermochemischen Reaktor (T) nach einem der Ansprüche 1 bis 3 umfasst, wobei das Gebäude (M) Mittel zum Abziehen von Luft für die Versorgung des Befeuchters (2) am Eingang des Behälters (10) des thermochemischen Reaktors (1) mit Luft (B) für die Speisung der chemischen Reaktion umfasst, und ein Umwälzmittel für die Umwälzung des Fluids (A₂) am Ausgang des Tauschers (12), der im Innern des Behälters (10) angeordnet ist.

5. Verfahren zur Nutzung eines thermochemischen Reaktors (T), wobei der thermochemische Reaktor (T) nach einem der Ansprüche 1 bis 3 einen Behälter (10) umfasst, in dessen Innern eine chemische Reaktion erfolgt, wobei das Verfahren die folgenden Schritte umfasst:
a) Zuführen von Luft (B₂) für die Speisung der Reaktion mit dem thermochemischen Material, das in dem Behälter (10) des thermochemischen Reaktors (T) enthalten ist,
b) Zuführen eines anderen zu erwärmenden Fluids (A₁) als der Luft (B) für die Versorgung des thermochemischen Reaktors (1) in einen Tauscher (12), der im Innern des Behälters (10) angeordnet ist,
c) Erwärmen des Fluids (A₁), das durch den Tauscher (12), der im Innern des Behälters (10) angeordnet ist, zu erwärmen ist,
d) Abziehen des Fluids (A₂) am Ausgang des Wärmetauschers (12),
e) Abziehen der Luft (B₃) am Ausgang des Behälters (10),
f) Befeuchten der Luft (B₁) für die Speisung der chemischen Reaktion vor ihrer Zuführung in das Innere des Behälters (10) des thermochemischen Reaktors (T),
**dadurch gekennzeichnet, dass** ein Schritt des Erwärmens der Luft (B₁) für die Speisung der chemischen Reaktion (1) während des Schritts des Befeuchtens durchgeführt wird, wobei dieser Schritt des Erwärmens der Luft (B₁) für die Speisung der chemischen Reaktion während des Schritts des Befeuchtens mindestens teilweise durch Wärmeaustausch mit der Luft (B₃) durchgeführt wird, welche die chemische Reaktion (16) gespeist hat und am Ausgang des Behälters (10) wieder aufgenommen wird.

## Claims

1. Thermochemical reactor (T) comprising:
- a reservoir (10) comprising a material (100) that reacts exothermally with water, with the reservoir comprising an inlet (14) to supply the material (100) with air (B), wet, in order to supply a chemical reaction between the water contained in the air (B) and the material (100) and an outlet (16) to remove the air (B) once it is heated and dried by the chemical reaction in said reservoir (10),
the thermochemical reactor (T) further comprising a heat exchanger (12) arranged in the reservoir (10) and intended to heat a second fluid (A) separate from the air (B) intervening in the chemical reaction, with at least one portion of the thermal energy obtained from the chemical reaction in order to extract from the reservoir (10) at least one portion of the thermal energy obtained from the chemical reaction, and a humidifier (2) intended to increase the humidity rate of the air (B₂) entering into the reservoir (10) in order to supply the chemical reaction,
**characterised in that** it further comprises a means for heating (22) the air (B₁) entering into the humidifier (2), the means of heating comprising a thermal energy exchanger (22) between the air (B₁) entering into the humidifier (2) and the air (B₃) leaving from the reservoir (10).

2. Thermochemical reactor (T) according to claim 1, **characterised in that** the thermochemical material (100) contained in the reservoir (10) comprises a Zeolite and/or MgSO₄.

3. Thermochemical reactor (T) according to claim 1 or 2, **characterised in that** the thermochemical material (100) has the form of balls of a diameter between 1 and 10 mm, but more preferably of a magnitude of 2mm.

4. Building (M) **characterised in that** it comprises a thermochemical reactor (T) according to one of claims 1 to 3, with the building (M) comprising means for extracting air making it possible to supply the humidifier (2) at the inlet of the reservoir (10) of the thermochemical reactor (1) with air (B) for the supplying of the chemical reaction and a means of circulation intended to circulate the fluid (A₂) at the outlet of the exchanger (12) arranged in the reservoir (10).

5. Method for using a thermochemical reactor, the thermochemical reactor according to one of claims 1 to 3, comprising a reservoir (10) wherein a thermochemical reaction takes place, comprising the following steps:
a) introduction of air (B₂) for the supplying of the reaction with the thermochemical material contained in the reservoir (10) of the thermochemical reactor (T),
b) introduction of a fluid (A₁) to be heated separate from the air (B) for the supplying of the thermochemical reactor (1) in an exchanger (12) arranged in the reservoir (10),
c) heating of the fluid (A₁) to be heated by the heat exchanger (12) arranged in the reservoir (10),
d) extraction of the fluid (A₂) at the outlet of the heat exchanger (12),
e) extraction of the air (B₃) at the outlet of the reservoir (10),
f) humidification of the air (B₁) for the supplying of the chemical reaction prior to its introduction into the reservoir (10) of the thermochemical reactor (T),
**characterised in that** a step of heating of the air (B₁) for the supplying of the chemical reaction (1) is carried out during the step of humidification, with this step of heating the air (B₁) for the supplying of the chemical reaction during the step of humidification being carried out at least partially through a heat exchange with the air (B₃) having supplied the chemical reaction (16) recovered at the outlet of the reservoir (10).
